# EUROPEAN PATENT APPLICATION

(11) **EP 4 503 789 A1**
(43) Date of publication of application: **05.02.2025**
(21) Application number: 23778094.5
(22) Date of filing: 27.03.2023
(51) Int. Cl.: H04W 64/00, H04W 4/029

(54) **INFORMATION TRANSMISSION METHOD AND NETWORK ELEMENT**

(30) Priority: 28.03.2022 CN 202210317145
(71) Applicant: VIVO MOBILE COMMUNICATION CO., LTD., Dongguan, Guangdong 523863 (CN)
(72) Inventor: YU, Hang, Dongguan, Guangdong 523863 (CN); CHONG, Weiwei, Dongguan, Guangdong 523863 (CN)
(74) Representative: Lavoix
(86) International application number: PCT/CN2023/084050
(87) International publication number: WO 2023/185727

(57) **Abstract**

This application discloses an information transmission method and a network element, which pertains to the field of communication technologies. The information transmission method of embodiments of this application includes: A first core network element receives a location service request from a second core network element. The location service request is used to request location information of at least one user equipment, the location service request includes location granularity indication information, and the location granularity indication information is used to indicate at least one of location granularities of multiple gradients. The first core network element determines location accuracy and a quality of service QoS class based on the location service request. The first core network element sends a user equipment location service request to a first network element. The user equipment location service request is used to request user equipment location information, the user equipment location service request includes the location accuracy and the QoS class, and the first network element is a third core network element, a fourth core network element, or a fifth core network element. The first core network element receives the user equipment location information sent by the first network element.

## Description

### CROSS-REFERENCE TO RELATED APPLICATIONS

This application claims priority of Chinese Patent Application No. 202210317145.9 filed in China on March 28, 2022, which is incorporated herein by reference in its entirety.

### TECHNICAL FIELD

This application pertains to the field of communication technologies, and in particular, to an information transmission method and a network element.

### BACKGROUND

Currently, location-related information of a user equipment (User Equipment, UE) obtained by a network data analytics function (Network Data Analytics Function, NWDAF) is obtained through an access management function (Access Management Function, AMF), the obtained location information of the user equipment is quite coarse-grained, and more accurate location information of the user equipment cannot be obtained.

### SUMMARY

Embodiments of this application provide an information transmission method and a network element, which can solve a problem that more accurate location information of a user equipment cannot be obtained through an NWDAF.

According to a first aspect, an information transmission method is provided. The method includes:
A first core network element receives a location service request from a second core network element. The location service request is used to request location information of at least one user equipment, the location service request includes location granularity indication information, and the location granularity indication information is used to indicate at least one of location granularities of multiple gradients.

The first core network element determines location accuracy and a quality of service QoS class based on the location service request.

The first core network element sends a user equipment location service request to a first network element. The user equipment location service request is used to request user equipment location information, the user equipment location service request includes the location accuracy and the QoS class, and the first network element is a third core network element, a fourth core network element, or a fifth core network element.

The first core network element receives the user equipment location information sent by the first network element.

According to a second aspect, an information transmission apparatus is provided. The apparatus is used in a first core network element and includes:
a first receiving module, configured to receive a location service request from a second core network element, where the location service request is used to request location information of at least one user equipment, the location service request includes location granularity indication information, and the location granularity indication information is used to indicate at least one of location granularities of multiple gradients;
a first determining module, configured to determine location accuracy and a quality of service QoS class based on the location service request;
a first sending module, configured to send a user equipment location service request to a first network element, where the equipment location service request is used to request user equipment location information, the user equipment location service request includes the location accuracy and the QoS class, and the first network element is a third core network element, a fourth core network element, or a fifth core network element; and
a second receiving module, configured to receive the user equipment location information sent by the first network element.

According to a third aspect, an information transmission method is provided. The method includes:
A first network element receives a user equipment location service request sent by a first core network element. The user equipment location service request is used to request user equipment location information, and the user equipment location service request includes location accuracy and a QoS class.

The first network element sends the user equipment location information to the first core network element based on the user equipment location service request.

The first network element is a third core network element, a fourth core network element, or a fifth core network element.

According to a fourth aspect, an information transmission apparatus is provided. The apparatus is used in a first network element and includes:
a third module, configured to receive a user equipment location service request sent by a first core network element, where the user equipment location service request is used to request user equipment location information, and the user equipment location service request includes location accuracy and a QoS class; and
a second sending module, configured to send the user equipment location information to the first core network element based on the user equipment location service request.

The first network element is a third core network element, a fourth core network element, or a fifth core network element.

According to a fifth aspect, a core network element is provided. The core network element is a first core network element, and includes a processor and a memory. The memory stores a program or an instruction that can be run on the processor, and when the program or the instruction is executed by the processor, the steps of the method described according to the first aspect are implemented.

According to a sixth aspect, a core network element is provided. The core network element is a first core network element, and includes a processor and a communication interface. The communication interface is configured to receive a location service request from a second core network element, the location service request is used to request location information of at least one user equipment, the location service request includes location granularity indication information, and the location granularity indication information is used to indicate at least one of location granularities of multiple gradients. The processor is configured to determine location accuracy and a quality of service QoS class based on the location service request. The communication interface is configured to: send a user equipment location service request to a first network element. The user equipment location service request is used to request user equipment location information, the user equipment location service request includes the location accuracy and the QoS class, and the first network element is a third core network element, a fourth core network element, or a fifth core network element; and receive the user equipment location information sent by the first network element.

According to a seventh aspect, a network element is provided. The network element is a first network element, and the network element includes a processor and a memory. The memory stores a program or an instruction that can be run on the processor, and when the program or the instruction is executed by the processor, the steps of the method described according to the third aspect are implemented.

According to an eighth aspect, a network element is provided. The network element is a first network element, and includes a processor and a communication interface. The communication interface is configured to: receive a user equipment location service request sent by a first core network element, where the user equipment location service request is used to request user equipment location information, and the user equipment location service request includes location accuracy and a QoS class; and send the user equipment location information to the first core network element based on the user equipment location service request.

The first network element is a third core network element, a fourth core network element, or a fifth core network element.

According to a ninth aspect, an information transmission system is provided. The system includes a first core network element and a first network element. The first core network element can be configured to execute the steps of the foregoing information transmission method according to the first aspect, and the first network element can be configured to execute the steps of the foregoing information transmission method according to the third aspect.

According to a tenth aspect, a readable storage medium is provided. The readable storage medium stores a program or an instruction, and when the program or the instruction is executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor, and the processor is configured to run a program or an instruction to implement the method according to the first aspect or the method according to the third aspect.

According to a twelfth aspect, a computer program/program product is provided. The computer program/program product is stored in a storage medium, and the computer program/program product is executed by at least one processor to implement the steps of the information transmission method according to the first aspect or the third aspect.

In embodiments of this application, a location service request with a gradient location granularity is received, and then location information is requested from a corresponding network element based on the location granularity, to ensure that location information of a corresponding location granularity can be obtained, and ensure that the first core network element can obtain accurate location information.

### BRIEF DESCRIPTION OF THE DRAWINGS

FIG. 1 is a block diagram of a wireless communication system according to an embodiment of this application;
FIG. 2 is a schematic flowchart 1 of an information transmission method according to an embodiment of this application;
FIG. 3 is a schematic diagram of a process of an NWDAF selecting an LMF;
FIG. 4 is a schematic flowchart of information sending between network elements involved in an embodiment of this application;
FIG. 5 is a schematic flowchart of a specific application scenario 1;
FIG. 6 is a schematic flowchart of a specific application scenario 2;
FIG. 7 is a schematic flowchart of a specific application scenario 3;
FIG. 8 is a schematic flowchart of a specific application scenario 4;
FIG. 9 is a schematic flowchart of a specific application scenario 5;
FIG. 10 is a schematic flowchart 2 of an information transmission method according to an embodiment of this application;
FIG. 11 is a schematic diagram 1 of a structure of an information transmission apparatus according to an embodiment of this application;
FIG. 12 is a schematic diagram of a structure of a core network element according to an embodiment of this application;
FIG. 13 is a schematic diagram 2 of a structure of an information transmission apparatus according to an embodiment of this application; and
FIG. 14 is a schematic diagram of a structure of a communication device according to an embodiment of this application.

### DESCRIPTION OF EMBODIMENTS

The following clearly describes the technical solutions in embodiments of this application with reference to the accompanying drawings in embodiments of this application. Apparently, the described embodiments are some but not all of the embodiments of this application. All other embodiments obtained by a person of ordinary skill in the art based on embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that embodiments of this application can be implemented in an order other than the order illustrated or described herein. Objects classified by "first" and "second" are usually of a same type, and the number of objects is not limited. For example, there may be one or more first objects. In addition, "and/or" in the specification and claims represents at least one of connected objects, and the character "/" generally indicates that associated objects have an "or" relationship.

It is worth noting that the technologies described in embodiments of this application are not limited to a long term evolution (Long Term Evolution, LTE)/LTE-Advanced (LTE-Advanced, LTE-A) system, and are further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in embodiments of this application may be used interchangeably. The technologies described can be used in both the systems and the radio technologies mentioned above as well as other systems and radio technologies. However, in the following descriptions, a new radio (New Radio, NR) system is described for example purposes, and NR terms are used in most of the following descriptions, although these technologies may also be applied to other applications than the NR system application, for example, a 6^{th} generation (6^{th} Generation, 6G) communication system.

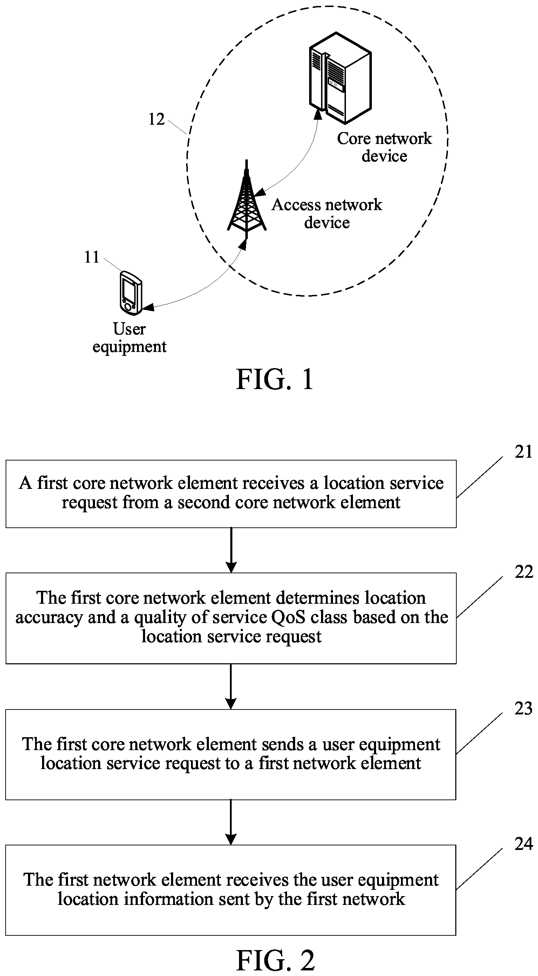

FIG. 1 is a block diagram of a wireless communication system to which an embodiment of this application can be applicable. The wireless communication system includes a user equipment 11 and a network-side device 12. The user equipment 11 may be a mobile phone, a tablet personal computer (Tablet Personal Computer, TPC), a laptop computer (Laptop Computer, LC) or a notebook computer, a personal digital assistant (Personal Digital Assistant, PDA), a handheld computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a vehicle user equipment (VUE), a pedestrian user equipment (Pedestrian User Equipment, PUE), a smart home device (a home device with a wireless communication function, such as a refrigerator, a television, a washing machine, furniture, or the like), a game console, a personal computer (Personal Computer, PC), a teller machine or a self-service machine, and other user equipment-side devices. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. It should be noted that a specific type of the user equipment 11 is not limited in embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or some other appropriate term in the art. As long as the same technical effect is achieved, the base station is not limited to a specific technical term. It should be noted that the base station in the NR system is taken only as an example for introduction in embodiments of this application, but a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application service discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that the core network device in the NR system is taken only as an example for introduction in embodiments of this application, but a specific type of the core network device is not limited.

The background technology related to this application is first briefly described as follows.

### 1. Location Service (Location Service, LCS)

The LCS is executed and provided by network elements such as an AMF and a location management function (Location Management Function, LMF) in the core network. An LCS message interacts between a UE and an LCS client (client) or an application function (Application Function, AF). A typical process is a mobile terminated location request (Mobile Terminated Location Request, MT-LR).

The MT-LR process is initiated by an external third-party application (LCS client) or by an AF through the NEF network element, and location information of the UE is finally obtained through a gateway mobile location center (Gateway Mobile Location Centre, GMLC), an AMF, an LMF and another network element.

In the LCS process, an LCS quality of service (Quality of Service, QoS) parameter set is used to indicate a service level of the entire LCS. The LCS QoS class includes:
LCS QoS class (QoS class);
accuracy (Accuracy, including horizontal and vertical location accuracy); and
latency (Latency) information.

### 2. Network data analytics function (Network Data Analytics Function, NWDAF)

The NWDAF is a network data analytics function network element that supports collection of a network element or user equipment-related data and provides information such as statistics and prediction. The NWDAF can collect data from network elements such as an AMF and an SMF or operation administration and maintenance (Operation Administration and Maintenance, OAM). In a current process, the NWDAF obtains user equipment location information through an AMF. The user equipment location information is coarse-grained, namely, at a tracking area (Tracking Area, TA) or cell (cell) level. In other words, the NWDAF can learn, from the AMF, which cell or TA a user equipment is currently in.

If an NWDAF consumer (consumer) initiates a service request to the NWDAF and requests the NWDAF to collect related information or give prediction, then NWDAF will collect information from different network elements based on parameters in a request message. After the NWDAF performs statistics and analysis, a result is returned to the NWDAF consumer.

With reference to the accompanying drawings, the following describes in detail an information transmission method and a network element provided in embodiments of this application by using some embodiments and application scenarios thereof.

As shown in FIG. 2, an information transmission method according to an embodiment of this application includes the following steps.

Step 21: A first core network element receives a location service request from a second core network element.

It should be noted that, the location service request is used to request location information of at least one user equipment, the location service request includes location granularity indication information, and the location granularity indication information is used to indicate at least one of location granularities of multiple gradients.

Optionally, the first core network element in this embodiment of this application means an NWDAF network element, and the second core network element means an NWDAF user, that is, an NWDAF consumer, which can be an AMF network element, an SMF network element, an AF network element, or the like.

Step 22: The first core network element determines location accuracy and a quality of service QoS class based on the location service request.

Step 23: The first core network element sends a user equipment location service request to a first network element.

It should be noted that, the user equipment location service request is used to request user equipment location information, the user equipment location service request includes the location accuracy and the QoS class, and the first network element is a third core network element, a fourth core network element, or a fifth core network element. Optionally, the third core network element is an AMF network element, the fourth core network element is an LMF network element, and the fifth core network element is a GMLC network element.

Step 24: The first core network element receives user equipment location information sent by a first network element.

It should be noted that, an existing location service can only provide a coarse-grained location service, and coarse-grained location information can be understood as location information with country/region accuracy and TA or cell accuracy. However, in this application, the location service request sent by the NWDAF consumer carries a gradient location granularity, to obtain location information based on the location granularity, thereby ensuring that location information of a corresponding location granularity can be obtained, and ensuring that the first core network element can obtain more accurate location information.

It should be noted that, the location information in this embodiment of this application includes:
A11: Geographic location information of a user equipment.

It should be noted that, the geographical location information can be divided into absolute location coordinates and relative location coordinates.

A 12: Movement information of the user equipment.

Optionally, the movement information of the user equipment includes: a movement speed of the user equipment and a movement direction of the user equipment.

A13: Location accuracy.

It should be noted that, the location accuracy includes horizontal accuracy and vertical accuracy, the horizontal location accuracy is up to 0.3 m, and the vertical location accuracy is up to 2 m.

A14: Location timestamp information.

It should be noted that, the location timestamp information means a location timestamp (timestamp).

Optionally, the location information may further include at least one of the following:
A21: UE identifier.

For example, the UE identifier may be a subscription permanent identifier (Subscription Permanent Identifier, SUPI), a Generic Public Subscription Identifier (Generic Public Subscription Identifier, GPSI), or the like.

A22: Civil location (Civil location).

It should be noted that, the civil location is used for emergency service scenarios required by regional supervision.

A23: Latency.

It should be noted that, the latency means latency information of a location service.

A24: QoS class.

It should be noted that the QoS class herein usually means a QoS class of interest (namely, a preferred QoS class), and the QoS class is divided into high-level QoS class, medium-level QoS class, and low-level QoS class.

It should be noted that, the high-level QoS class means Assured QoS class, that is, statistics and prediction need to be stringently performed based on a granularity of requested location information; the medium-level QoS class means multiple QoS class, that is, a requested granularity is executed first, and if the most stringent requirements cannot be met, a less stringent requirement needs to be met; and the low-level QoS class means best effort QoS class, that is, a location process is tried to implement, and accuracy may not be a mandatory requirement.

A25: Age of location (age of location).

Optionally, the location information may further include: location environment indication information.

Optionally, the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

Optionally, a manner of the first core network element determining location accuracy based on the location service request includes:
The first core network element maps a location granularity indicated by the location granularity indication information, to obtain the location accuracy.

For example, the location granularity in the location service request indicates a size of a location range. For example, the location granularity carried in the location service request is 10 km, or it can be 100 m to 1000 m.

Optionally, an optional mapping method provided in this embodiment of this application is:
0 indicates that required location information corresponds to country/region accuracy (>10 km);
1 indicates that required location information corresponds to TA or cell accuracy (about 1 km);
2 indicates that required location information corresponds to medium-level accuracy (about 500 m);
3 indicates that required location information corresponds to second highest-level accuracy (about 100 m);
4 indicates that required location information corresponds to high-level accuracy (about 10 m); and
5 indicates that required location information corresponds to extreme accuracy (about 1 m).

It should be noted that, in this embodiment of this application, the location information with country/region accuracy and TA or cell accuracy is regarded as coarse-grained location information, and location information with location accuracy less than the TA or cell accuracy is regarded as fine-grained location information.

It should be noted that, the foregoing mapping method uses different bit values to represent different location accuracy obtained through mapping.

Optionally, the second core network element may further provide an accuracy requirement. Then the first core network element determines a value for the first network element based on an actual situation. Specifically, one of the following implementations can be adopted.

Implementation 1: The second core network element hopes to obtain user equipment accuracy of about 100 m. In other words, the second core network element informs the first core network element that the accuracy is [80 m-120 m]. The first core network element determines a current request based on its own situation or a QoS class execution situation fed back by a last LCS, and determines that the accuracy requirement is suitably set to 80 m. Therefore, accuracy information requested to the first network element is marked as 80 m.

Implementation 2: The second core network element directly provides user equipment accuracy of 80 m, which is an exact value. Then the first core network element directly forwards the accuracy information to the request of the first network element.

It should be noted that this mapping method uses values of different location accuracy to represent location accuracy obtained through mapping.

Optionally, a manner of the first core network element determining the QoS class based on the location service request includes one of the following:
A31: The first core network element obtains the QoS class carried in the location service request.

It should be noted that in this case, the second core network element carries the QoS class in the sent location service request, and the first core network element can directly obtain the QoS class.

A32: The first core network element maps analysis accuracy information of interest carried in the location service request, to obtain the QoS class.

It should be noted that in this case, the second core network element does not directly carry the QoS class in the location service request sent, but carries the analysis accuracy information of interest. At this time, the first core network element needs to map the analysis accuracy information of interest, to obtain the QoS class.

It should be noted that, the analysis accuracy information of interest (preferred analysis accuracy) can be several gradients of high, medium and low levels. When mapping is performed, the first core network element maps several gradients of accuracy as the QoS class (QoS class). Optionally, one implementation of the mapping method is:

When the analysis accuracy information of interest is a gradient with a high accuracy requirement, it should be mapped as high-level QoS.

When the analysis accuracy information of interest is a gradient with a medium accuracy requirement, it should be mapped as medium-level QoS.

When the analysis accuracy information of interest is a gradient with a low accuracy requirement, it should be mapped as low-level QoS.

Optionally, the user equipment location service request includes a user equipment identifier or a user equipment group identifier.

It should be noted that, if the second core network element requests the first core network element for a location situation of all user equipments near a specific location, or directly provides a group identifier of a user equipment group (UE group), then the second core network element needs to obtain location information of a group of user equipments.

A manner of obtaining the user equipment group identifier includes one of the following:
B11: The first core network element obtains the user equipment group identifier carried in the location service request.

It should be noted that, if the first core network element provides a group identifier of a UE group, the first core network element does not need to perform a mapping process.

B 12: The first core network element maps a location indication carried in the location service request, to obtain the user equipment group identifier.

It should be noted that, if the second core network element provides a specific location, after the first core network element receives the location, the first core network element obtains the group identifier based on an internal static configuration list or mapping information obtained from another core network element. Optionally, the first core network element can apply for location information of multiple user equipments from the fifth core network element at a time. In other words, when the first network element is the fifth core network element, the user equipment location service request sent by the first core network element can carry the user equipment group identifier. Further, after receiving the user equipment group identifier, the fifth core network element needs to map the group identifier as a UE list. Thereafter, the fifth core network element obtains location information of each UE in a location process for this UE list. When the first network element is the third core network element or the fourth core network element, even if the first core network element learns that it needs to obtain location information of a group of user equipments, it is necessary to send a user equipment location service request to the third core network element or the fourth core network element for each user equipment, that is, the first core network element can only request location information of one user equipment at a time.

It should further be noted that, when the first network element is the fifth core network element, in a case that the fifth core network element determines that the user equipment location service request requests location information of a group of user equipments, and optionally, after location information of each user equipment is obtained, the location information of each user equipment is sent to the first core network element. In other words, a GMLC network element sends location information to the NWDAF network element every time the GMLC network element collects the user equipment location information. Optionally, after location information of all user equipments in a group of user equipments, the location information of the group of user equipments is sent to the first core network element. In other words, at this time, the GMLC network element supports a function of storing information. After obtaining location information of each user equipment, the GMLC network element first stores the location information, and then sends the location information to the NWDAF network element together with the location information of all the user equipments in the group of user equipments after obtaining the location information of all the user equipments in the group of user equipments.

Optionally, in a case that the first network element is the fourth core network element, a manner of obtaining the fourth core network element includes:
The first core network element obtains an address of the second network element of the user equipment.

In a case that the first core network element determines that the second network element can provide a service for the user equipment, the first core network element determines the second network element as the fourth core network element, and in a case that the first core network element determines that the second network element cannot provide a service for the user equipment, the first core network element obtains an address of the fourth core network element provided by the second network element.

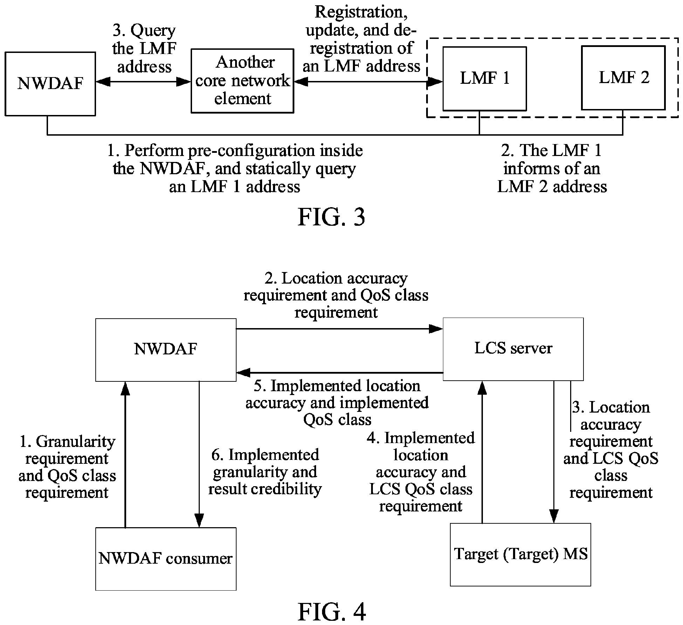

It should be noted that in this case, an LMF address is obtained based on the user equipment identifier (an identifier of a single UE or a group identifier of a UE group). As shown in FIG. 3, a specific implementation process is as follows:
Step 1: Preset a configuration table inside the NWDAF network element, which can statically query an address of an LMF 1 of the UE, and the LMF 1 provides a subsequent location service.
Step 2: The NWDAF network element finds the LMF 1 address through the configuration table. If the LMF 1 determines that a location service cannot be provided for the user equipment, the LMF 1 informs the NWDAF network element to modify local static configuration and tell an address of an LMF 2 to the NWDAF network element. After modifying the static configuration, the NWDAF network element initiates a user equipment location service request to the LMF 2.
Step 3: If the NWDAF network element does not pre-configure the information, the NWDAF network element queries a current address of the LMF corresponding to a specific UE ID from other core network elements (the core network elements include but are not limited to: an AMF, a UDM, an NRF, or the like, which are responsible for updating and maintaining the LMF address).

Optionally, in a case that the first network element is the third core network element, a manner of obtaining the third core network element includes:
in a case that the first core network element determines that information of the at least one user equipment can be collected and used by the first core network element, obtaining an address of at least one third core network element from a sixth core network element.

The at least one third core network element provides a service for the at least one user equipment.

It should be noted that the sixth core network element in this embodiment of this application means a UDM network element. When the NWDAF network element needs to perform statistics coarse-grained and fine-grained location information of the user equipment, the NWDAF network element first checks consumer intention with the UDM network element to see whether the information of the user equipment can be collected and used by the NWDAF network element. If the information can be collected and used, the NWDAF network element obtains, from the UDM network element, the AMF address in which the user equipment is currently located. It should be noted that the NWDAF network element can request AMF addresses of multiple user equipments from the UDM network element at a time. Because different user equipments may correspond to different AMF network elements, the UDM network element returns multiple AMF addresses. The NWDAF network element can also request an AMF address of only one user equipment from the UDM network element at a time, and the UDM network element returns one AMF address.

It should be noted that the first core network element may not distinguish a type of location accuracy, and send all location accuracy requests to the first network element. Optionally, the first core network element may also only send a specific type of location accuracy request to the first network element. Specifically, that the first core network element sends the user equipment location service request to the first network element in a further optional implementation is as follows:

The first core network element determines the type of location accuracy.

In a case that the type of the location accuracy is a first accuracy type, the first core network element sends the user equipment location service request to the first network element.

The first network element is the fourth core network element or the fifth core network element.

It should be noted that the first accuracy type means a fine-grained accuracy type. In other words, in this case, the first core network element can only request fine-grained location information from the fourth core network element or the fifth core network element, and coarse-grained location information can be obtained from the AMF network element based on an existing process.

Optionally, after obtaining the user equipment location information, the first core network element determines that, if the location accuracy of the obtained location information of the at least one user equipment is less than or equal to location accuracy requested by the second core network element, the first core network element obtains an implemented granularity and result credibility of the location information of the at least one user equipment.

The first core network element sends the location information and the implemented granularity of the at least one user equipment and the result credibility of the location information to the second core network element.

Optionally, a manner of the first core network element obtaining the implemented granularity of the location information includes:
mapping the location accuracy of the location information as the implemented granularity.

Optionally, a manner of the first core network element obtaining the result credibility of the location information includes:
determining the result credibility of the location information based on a QoS class implemented by the location information.

It should be noted that what is implemented here is that after the first core network element obtains the user equipment location information, reverse mapping needs to be performed on the location accuracy of the location information, and the location accuracy is mapped as the implemented granularity. Specifically, the implementation granularity can be understood as a location granularity corresponding to the location accuracy actually performed by the first network element when obtaining the location information.

It should also be noted that when returning the user equipment location information to the second core network element, the first core network element also needs to send the result credibility of the location information to the second core network element, so that the second core network element can finally determine whether to use the location information based on the result credibility.

Specific applications of embodiments of this application are described in detail below.

First, information sent by the network elements involved in embodiments of this application is described as follows.

As shown in FIG. 4, a target MS represents a target user equipment, which can be a UE or a group of UEs; an LCS server may be an LMF network element, an AMF network element, or a GMLC network element; an NWDAF network element is a core network element, responsible for intelligent statistics and prediction functions; and an NWDAF consumer is a consumer of the NWDAF, which can be an AMF, an SMF, an AF, or the like. It should also be noted that a QoS class and an LCS QoS class are not completely equivalent, and there is a mapping relationship.

A specific process includes:
Step 1: The NWDAF consumer initiates a service request to the NWDAF network element, carrying request parameters, including:
C11: Analytics ID (specific identifier of a service);
C12: Target user equipment (can be a single user equipment ID (SUCI, GPSI, or the like) or a group of user equipments);
C13: Analytics filter (Analytics filter) (including an area of interest (Area of Interest) and a visited area of interest (Visited Area(s) of Interest));
C14: Analysis time (indicates a time interval for NWDAF statistics or prediction);
C15: Sorting order of preferred results of interest (in ascending or descending order);
C 16: Notification (notification) association ID and notification target address; and
C17: Preferred analysis accuracy (can be several gradients of high, medium and low levels).

Optionally, the request may also carry a maximum number of target user equipments.

Optionally, the request may also carry location granularity indication information (namely, a granularity of preferred location information). The location granularity indication information is a gradient indication information, that is, used to indicate one or more of location granularities of multiple gradients, and the gradient includes location accuracy from a country/region range to a decimeter range. Granularity indication is an index-like identification method that indicates a specific location accuracy value.

Optionally, the request may also carry a preferred QoS class. It should be noted that, if the NWDAF consumer carries the information, the information can be directly mapped to the LCS QoS class in step 2. If the information is not carried, the information needs to be mapped in step 2.

Step 2: After receiving the foregoing request, the NWDAF network element sends, to the LCS server, a message requesting location information. The message includes: location accuracy, a QoS class, and other information.

Step 3: The LCS server implements a location accuracy requirement and a QoS requirement during a location process with the target MS, that is, accuracy in the LCS QoS, including horizontal accuracy (Horizontal accuracy) and vertical accuracy (Vertical accuracy), as well as a QoS class.

Step 4: The location accuracy and LCS QoS implemented during the location process are reported to the LCS server through LCS signaling in this step.

Step 5: The LCS server reports the implemented location accuracy and QoS class to the NWDAF network element. Optionally, information such as a location latency and user privacy verification is provided for the NWDAF network element.

Step 6: After receiving the implemented location accuracy and QoS class, if a requirement in step 1 is met, the NWDAF network element reversely maps the information as the implemented granularity and the result credibility, and the NWDAF network element reports the information to the NWDAF consumer in a statistical result or a prediction message.

Optionally, the implemented location accuracy is mapped as an implemented granularity indication, and reverse mapping is performed according to step 2.

The implemented QoS class is used as one of calculation factors of the result credibility, and the result credibility is considered as follows:
D1: If the preferred QoS class is provided in step 1, the NWDAF network element verifies whether the implemented QoS class is consistent with the required one. If other factors are consistent, if the implemented QoS class meets the requirement, the result credibility is higher than a result credibility that is not implemented or does not meet the requirement.
D2: If the preferred QoS class is not provided in step 1, the implemented QoS class is compared with the mapped QoS class based on a mapping relationship between the preferred analysis accuracy and the QoS class in step 2. If other factors are consistent, if the implemented QoS class meets the requirement, the result credibility is higher than a result credibility that is not implemented or does not meet the requirement.
D3: If the granularity or QoS requirement requested in step 1 cannot be met, the NWDAF network element determines the QoS, latency information, privacy verification and other information replied by the LCS server, and reports relevant reasons to the NWDAF consumer. The reasons here include: a long link latency, consumer privacy verification failure, and the like.

It should be noted that, the premise for the NWDAF network element to send a request to the LCS server and the LCS server to send a request to the target MS is that the consumer privacy verification or user intention check is passed. A specific implementation process of this embodiment of this application is described as follows from a perspective of different implementations.

First of all, it should be noted that the NWDAF, AMF, LMF, UDM, and GMLC mentioned below are for simple description, and they all correspond to corresponding network elements.

Specific application scenario 1: An NWDAF obtains location information of multiple granularities of a UE through an AMF.

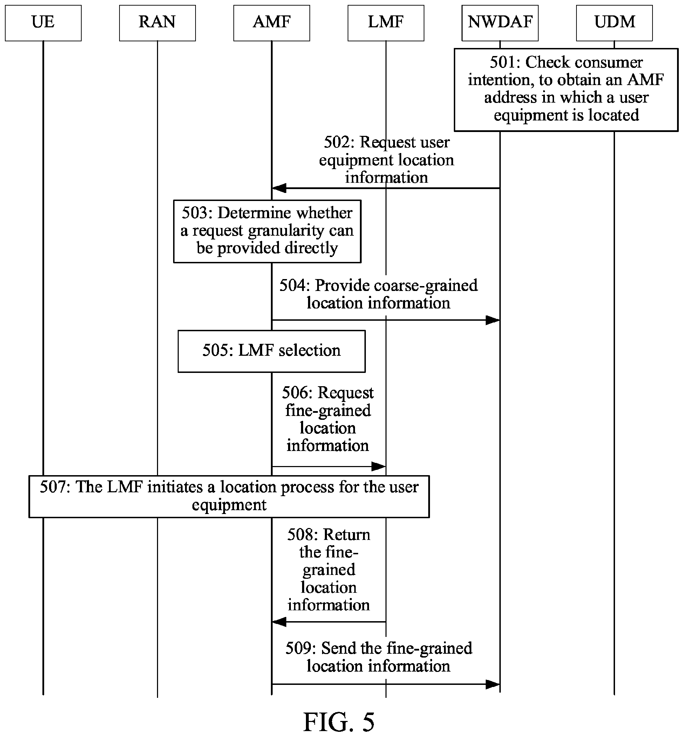

It should be noted that, a specific implementation process of this application scenario is shown in FIG. 5, which specifically includes:
Step 501: The NWDAF needs to perform statistics on user equipment location information (including coarse-grained and fine-grained information), and first checks consumer intention with a UDM to see whether the user equipment information can be collected and used by the NWDAF. If the information can be collected and used, an AMF address in which a user equipment is currently located is obtained from the UDM.
Step 502: The NWDAF requests the user equipment location information from the AMF, which can allow the AMF to report immediately or allow the user equipment to report based on events (a periodic event, a cross-cell event, and the like).

It should be noted that, a request sent by the NWDAF also includes a user equipment identifier (SUPI, GPSI, or the like.), location accuracy, location timestamp information, and the like.

Step 503: After receiving the request, the AMF determines whether current location accuracy can be directly provided by the AMF. If the AMF determines that the NWDAF requirement can be met, step 504 is executed. If the requirement cannot be met, step 505 to step 509 are executed.

Step 504: The AFM provides location information to the NWDAF, including content requested in step 502. If specific parameters cannot be provided, the AMF optionally provides relevant failure cause information.

Step 505: The AMF currently cannot provide location information that meets the NWDAF granularity requirement, and therefore the AMF looks for a suitable LMF to initiate a location process to obtain the location information, and finds a suitable LMF through an LMF selection process.

Step 506: The AMF requests location information from the LMF, and requests the LMF to provide location information that meets an accuracy requirement.

Step 507: Based on the requirement of the AMF, the LMF initiates the location process, including a UE assisted (UE assisted) process, a UE based (UE based) process, a network assisted (Network assisted) process, and another location process. In this process, the LMF can obtain the location information required in step 506.

Step 508: The LMF replies the location information required in step 506 to the AMF. If some parameters cannot be provided or cannot be met, the LMF optionally provides relevant failure cause information.

Step 509: The AMF reports the received user equipment location information to the NWDAF.

It should be noted that, when requesting the user equipment location information from the AMF, the NWDAF needs to request the user equipments one by one. In other words, the NWDAF can only obtain location information of one user equipment by sending a request.

Specific application scenario 2: An NWDAF obtains fine-grained location information from an AMF through a GMLC, and obtains coarse-grained location information from the AMF.

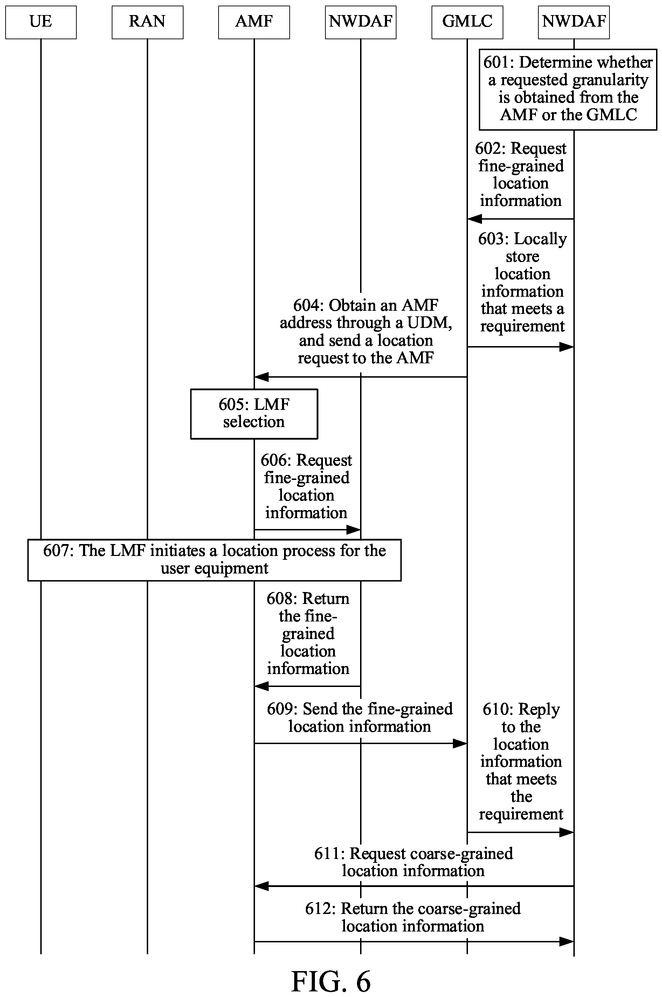

It should be noted that, a specific implementation process of this application scenario is shown in FIG. 6, which specifically includes:
Step 601: The NWDAF determines user equipment location information (including coarse-grained and fine-grained information) that statistics needs to be performed on. If fine-grained location information needs to be requested, step 602 to step 610 are executed. If coarse-grained location information is requested, step 611 to step 612 are executed.
Step 602: The NWDAF requests fine-grained location information of a user equipment from the GMLC.

It should be noted that, if it is in a roaming scenario, the NWDAF sends a request to the GMLC of a main service (H-GMLC), and the H-GMLC requests a GMLC of a visited location (V-GMLC). If it is in a non-roaming scenario, the NWDAF directly sends a request to the H-GMLC. The GMLC further determines whether the requirement of the NWDAF can be met by determining whether the relevant user equipment location information is currently stored, including whether the location accuracy, an age of location (maximum age of location), a timestamp, and the like meet the requirement. If the requirement can be met, step 603 is executed. If the requirement cannot be met, step 604 and subsequent processes are executed.

Step 603: The GMLC verifies that the current user equipment location information can meet the requirement of the NWDAF, and the GMLC directly returns the user equipment location information that meets the requirement.

Step 604: The GMLC cannot meet the requirement of the NWDAF, and obtains an AMF address of the current user equipment through signaling interaction with the UDM; and the GMLC initiates a location request to the AMF.

Step 605: After receiving the request from the GMLC, the AFM finds a suitable LMF through the LMF selection process.

Step 606: The AMF requests location information from the LMF, and requests the LMF to provide location information that meets an accuracy requirement.

Step 607: Based on the requirement of the AMF, the LMF initiates a location process, including a UE assisted (UE assisted) process, a UE based (UE based) process, a network assisted (Network assisted) process, and another location process. In this process, the LMF can obtain the location information required in step 606.

Step 608: The LMF replies the location information required in step 607 to the AMF.

Step 609: The AMF reports the received user equipment location information to the GMLC. If specific parameters cannot be provided, the AMF optionally provides relevant failure cause information.

Step 610: The GMLC reports the user equipment location information to the NWDAF.

Step 611: The NWDAF determines that coarse-grained location information is currently required, obtains a service AMF address of the current user equipment through the UDM, and directly requests the user equipment location information from the AMF.

Step 612: The AMF reports the user equipment location information to the NWDAF. If specific parameters cannot be provided, the AMF optionally provides relevant failure cause information.

Specific application scenario 3: An NWDAF obtains location information of different granularities from an LMF through a GMLC.

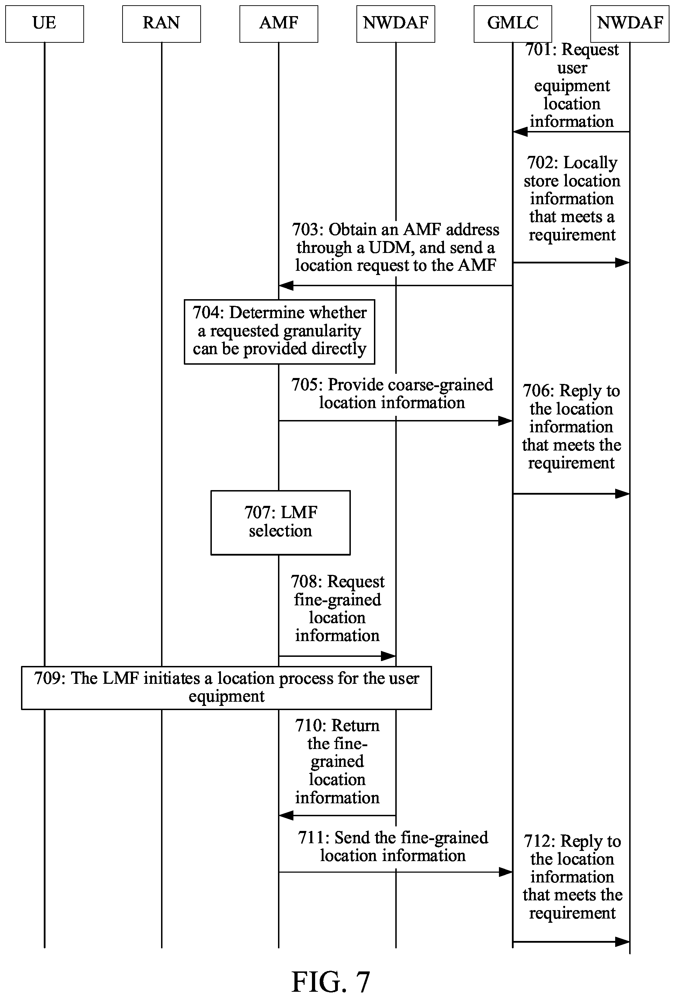

It should be noted that, a specific implementation process of this application scenario is shown in FIG. 7, which specifically includes:
Step 701: The NWDAF requests fine-grained location information of a user equipment from the GMLC.

It should be noted that, if it is in a roaming scenario, the NWDAF sends a request to the GMLC of an H-GMLC, and the H-GMLC requests the GMLC of a visited location (V-GMLC). If it is in a non-roaming scenario, the NWDAF directly sends a request to the H-GMLC. The GMLC further determines whether a requirement of the NWDAF can be met by determining whether the relevant user equipment location information is currently stored, including whether location accuracy, an age of location (maximum age of location), a timestamp, and the like meet the requirement. If the requirement can be met, step 702 is executed. If the requirement cannot be met, step 703 and subsequent processes are executed.

Step 702: The GMLC verifies that the current user equipment location information can meet the requirement of the NWDAF, and the GMLC directly returns the user equipment location information that meets the requirement.

Step 703: The GMLC cannot meet the requirement of the NWDAF, and obtains an AMF address of the current user equipment through signaling interaction with the UDM; and the GMLC initiates a location request to the AMF.

Step 704: After receiving the request, the AMF determines whether current location accuracy can be directly provided by the AMF. If the AMF determines that an NWDAF granularity requirement can be met, step 705 and step 706 are executed. If the requirement cannot be met, step 707 to step 712 are executed.

Step 705: The AMF provides location information to the GMLC, including content requested in step 703. If specific parameters cannot be provided, the AMF optionally provides relevant failure cause information.

Step 706: The GMLC reports the user equipment location information to the NWDAF.

Step 707: The AMF currently cannot provide location information that meets the NWDAF granularity requirement, and therefore the AMF looks for a suitable LMF to initiate a location process to obtain the location information, and finds a suitable LMF through an LMF selection process.

Step 708: The AMF requests location information from the LMF, and requests the LMF to provide location information that meets an accuracy requirement.

Step 709: Based on the requirement of the AMF, the LMF initiates a location process, including a UE assisted (UE assisted) process, a UE based (UE based) process, a network assisted (Network assisted) process, and another location process. In this process, the LMF can obtain the location information required in step 708.

Step 710: The LMF replies the location information required in step 708 to the AMF. If some parameters cannot be provided or cannot be met, the LMF optionally provides relevant failure cause information.

Step 711: The AMF reports the received user equipment location information to the GMLC.

Step 712: The GMLC reports the user equipment location information to the NWDAF.

Specific application scenario 4: An NWDAF directly obtains fine-grained location information from an LMF, and obtains coarse-grained location information through an AMF.

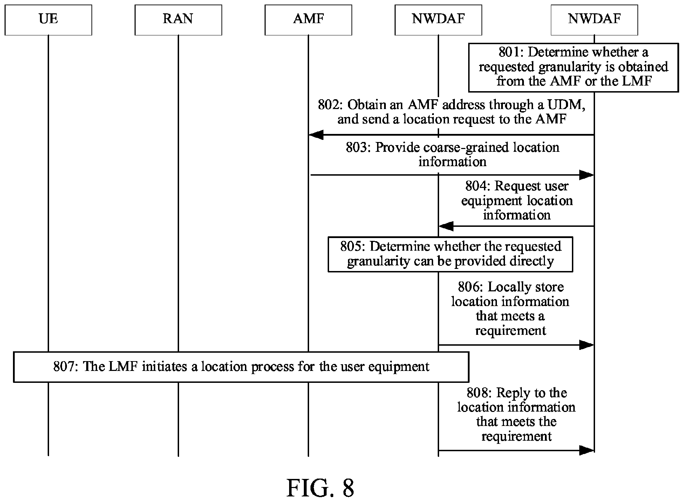

It should be noted that, a specific implementation process of this application scenario is shown in FIG. 8, which specifically includes:
Step 801: An NWDAF determines whether a requested granularity is obtained from the AMF or the LMF.
Step 802: The NWDAF obtains an AMF address through the UDM, and sends a location request to the AMF.
Step 803: The AMF provides coarse-grained location information to the NWDAF.
Step 804: The NWDAF requests user equipment location information from the LMF.
Step 805: The LMF determines whether the requested granularity can be provided directly.
Step 806: The LMF provides the NWDAF with location information that meets a requirement locally stored.
Step 807: The LMF initiates a location process for a user equipment.
Step 808: The LMF replies to the NWDAF with the location information that meets the requirement.

Here, an interface for direct interaction between the NWDAF and the LMF is introduced.

The NWDAF performs determining. If the location information with a coarse granularity needs to be obtained, the NWDAF initiates a location request to the AMF and executes step 802 and step 803. If the location information with a finer granularity needs to be obtained, the NWDAF directly requests the LMF to initiate a location procedure, and executes step 804 to step 808.

Step 805: If the LMF itself supports storage of location information of different granularities and the stored location information meets the requirement of step 804, the LMF directly provides the location information in step 806. Otherwise, the LMF executes step 807 and step 808.

Specific application scenario 5: An NWDAF directly obtains location information of different granularities from an LMF.

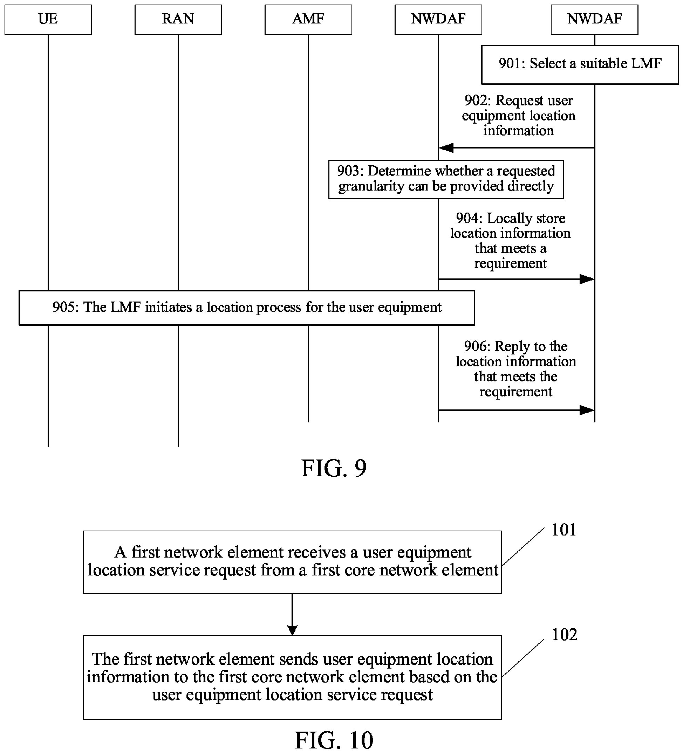

It should be noted that, a specific implementation process of this application scenario is shown in FIG. 9, which specifically includes:
Step 901: The NWDAF selects a suitable LMF.
Step 902: The NWDAF requests user equipment location information from the LMF.
Step 903: The LMF determines whether a requested granularity can be provided directly.
Step 904: The LMF provides the NWDAF with location information that meets a requirement locally stored.
Step 905: The LMF initiates a location process for a user equipment.
Step 906: The LMF replies to the NWDAF with the location information that meets the requirement.

Here, an interface for direct interaction between the NWDAF and the LMF is introduced.

It should be noted that, in this application scenario, an interface for obtaining location information is completely replaced by the interface between the NWDAF and the LMF. The NWDAF does not perform determining, but directly requests requested accuracy information to the LMF, and the LMF determines whether the location information with the requested granularity can be provided directly. If the granularity can be provided, the location information is directly returned to the NWDAF. If the granularity cannot be provided, the processes of step 905 and step 906 are executed.

It should be noted that, according to this embodiment of this application, the NWDAF can obtain user equipment location information of different granularities. This can improve a service level of statistics and prediction of the NWDAF.

As shown in FIG. 10, an embodiment of this application further provides an information transmission method, including:
Step 101: A first network element receives a user equipment location service request sent by a first core network element, where the user equipment location service request is used to request user equipment location information, and the user equipment location service request includes location accuracy and a QoS class.
Step 102: The first network element sends the user equipment location information to the first core network element based on the user equipment location service request.

The first network element is a third core network element, a fourth core network element, or a fifth core network element.

Optionally, that the first network element sends the user equipment location information to the first core network element includes:
In a case that the first network element determines that the user equipment location service request requests location information of a group of user equipments, after location information of each user equipment is obtained, the location information of each user equipment is sent to the first core network element, or after location information of all user equipments in the group of user equipments is obtained, the location information of the group of user equipments is sent to the first core network element.

The first network element is the fifth core network element.

Optionally, in a case that the first network element is the third core network element or the fifth core network element, that the first network element sends the user equipment location information to the first core network element based on the user equipment location service request includes:
The first network element determines whether the location accuracy in the user equipment location service request can be provided.

In a case that the first network element determines that location information of the location accuracy can be provided, the user equipment location information is sent to the first core network element.

Optionally, after that the first network element determines whether the location accuracy in the user equipment location service request can be provided, the method further includes:

If the first network element determines that the location information of the location accuracy cannot be provided, the user equipment location service request is sent to a third network element.

The first network element receives user equipment location information sent by the third network element.

The first network element sends the user equipment location information to the first core network element.

In a case that the first network element is the third core network element, the third network element is the fourth core network element. In a case that the first network element is the fifth core network element, the third network element is the third core network element.

Optionally, the location information includes:
geographic location information of a user equipment;
movement information of the user equipment;
location accuracy; and
location timestamp information.

Optionally, the movement information of the user equipment includes:
a movement speed of the user equipment and a movement direction of the user equipment.

Optionally, the location information includes:
location environment indication information.

Optionally, the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

The information transmission method provided in embodiments of this application can be executed by an information transmission apparatus. In embodiments of this application, the information transmission apparatus provided in embodiments of this application is described by using an example in which the information transmission method is executed by the information transmission apparatus.

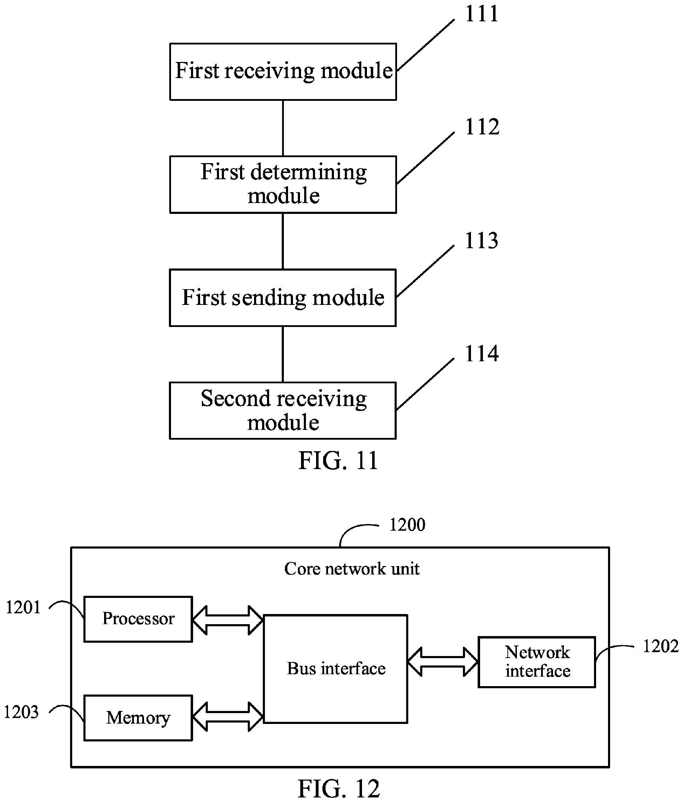

As shown in FIG. 11, an information transmission apparatus in an embodiment of this application is used in a first core network element, and includes:
a first receiving module 111, configured to receive a location service request from a second core network element, where the location service request is used to request location information of at least one user equipment, the location service request includes location granularity indication information, the location granularity indication information is used to indicate at least one of location granularities of multiple gradients;
a first determining module 112, configured to determine location accuracy and a quality of service QoS class based on the location service request;
a first sending module 113, configured to send a user equipment location service request to a first network element, where the user equipment location service request is used to request user equipment location information, the user equipment location service request includes the location accuracy and the QoS class, and the first network element is a third core network element, a fourth core network element, or a fifth core network element; and
a second receiving module 114, configured to receive the user equipment location information sent by the first network element.

Optionally, the first determining module 112 is specifically configured to:
map a location granularity indicated by the location granularity indication information, to obtain the location accuracy.

Optionally, the first determining module 112 is specifically configured to:
obtain the QoS class carried in the location service request; or
map analysis accuracy information of interest carried in the location service request, to obtain the QoS class.

Optionally, the QoS class includes at least one of the following:
high-level QoS;
medium-level QoS; and
low-level QoS.

Optionally, after the second receiving module 114 receives the user equipment location information sent by the first network element, the information transmission apparatus further includes:
an obtaining module, configured to: if determining that the location accuracy of the obtained location information of the at least one user equipment is less than or equal to location accuracy requested by the second core network element, obtain an implemented granularity and result credibility of the location information of the at least one user equipment; and
a third sending module, configured to send the location information and the implemented granularity of the at least one user equipment and the result credibility of the location information to the second core network element.

Optionally, a manner of obtaining the implemented granularity of the location information includes:
mapping the location accuracy of the location information as the implemented granularity.

Optionally, a manner of obtaining the result credibility of the location information includes:
determining the result credibility of the location information based on a QoS class implemented by the location information.

Optionally, the user equipment location service request includes a user equipment identifier or a user equipment group identifier.

A manner of obtaining the user equipment group identifier includes:
The first core network element obtains the user equipment group identifier carried in the location service request.

Alternatively, the first core network element maps a location indication carried in the location service request, to obtain the user equipment group identifier.

Optionally, in a case that the first network element is the fourth core network element, a manner of obtaining the fourth core network element includes:
obtaining an address of a second network element of the user equipment; and
in a case that it is determined that the second network element can provide a service for the user equipment, determining the second network element as the fourth core network element, and in a case that it is determined that the second network element cannot provide a service for the user equipment, obtaining an address of the fourth core network element provided by the second network element.

Optionally, in a case that the first network element is the third core network element, a manner of obtaining the third core network element includes:
in a case that it is determined that information of the at least one user equipment can be collected and used by the first core network element, obtaining an address of at least one third core network element from a sixth core network element.

The at least one third core network element provides a service for the at least one user equipment.

Optionally, the first sending module 113 includes:
a first determining unit, configured to determine a type of the location accuracy; and
a first sending unit, configured to: in a case that the type of the location accuracy is a first accuracy type, sending the user equipment location service request to the first network element.

The first network element is the fourth core network element or the fifth core network element.

Optionally, the location information includes:
geographic location information of the user equipment;
movement information of the user equipment;
location accuracy; and
location timestamp information.

Optionally, the movement information of the user equipment includes:
a movement speed of the user equipment and a movement direction of the user equipment.

Optionally, the location information includes:
location environment indication information.

Optionally, the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

The information transmission apparatus provided in this embodiment of this application enables an NWDAF to obtain user equipment location information of different granularities, and can improve a service level of statistics and prediction of the NWDAF.

The information transmission apparatus in this embodiment of this application may be an electronic device, for example, an electronic device with an operating system, or a component in an electronic device, such as an integrated circuit or a chip. The electronic device can be a device other than a user equipment. For example, another device can be a server, a network attached storage (Network Attached Storage, NAS), or the like. This is not specifically limited in this embodiment of this application.

The information transmission apparatus provided in this embodiment of this application can implement the processes implemented in the method embodiment of FIG. 2 with the same technical effects achieved. To avoid repetition, details are not described herein again.

An embodiment of this application further provides a core network element. The core network element is a first core network element, and includes a processor and a communication interface. The processor is configured to receive a location service request from a second core network element, the location service request is used to request location information of at least one user equipment, the location service request includes location granularity indication information, and the location granularity indication information is used to indicate at least one of location granularities of multiple gradients. The communication interface is configured to: determine location accuracy and a quality of service QoS class based on the location service request; send a user equipment location service request to a first network element, where the user equipment location service request is used to request user equipment location information, the user equipment location service request includes the location accuracy and the QoS class, and the first network element is a third core network element, a fourth core network element, or a fifth core network element; and receive the user equipment location information sent by the first network element.

This core network element embodiment corresponds to the foregoing first core network element-side method embodiment. The implementation processes and implementations of the foregoing method embodiment can be applied to this core network element embodiment with the same technical effects achieved.

Specifically, an embodiment of this application further provides a core network element. The core network element is a first core network element. As shown in FIG. 12, the core network element 1200 includes: a processor 1201, a network interface 1202, and a memory 1203. The network interface 1202 is, for example, a common public radio interface (common public radio interface, CPRI).

Specifically, the core network element 1200 in this embodiment of the present invention further includes: an instruction or a program stored in the memory 1203 that can be run on the processor 1201. The processor 1201 invokes the instruction or the program in the memory 1203 to execute the method executed by the modules shown in FIG. 11 with the same technical effects achieved. To avoid repetition, details are not described herein again.

An embodiment of this application further provides a readable storage medium. The readable storage medium stores a program or an instruction. When the program or the instruction is executed by a processor, the processes of the foregoing information transmission method embodiment are implemented with the same technical effects achieved. To avoid repetition, details are not described herein again.

The processor is the processor in the user equipment described in the foregoing embodiment. The readable storage medium includes a computer-readable storage medium, for example, a computer read-only memory ROM, a random access memory RAM, a magnetic disk, or an optical disc.

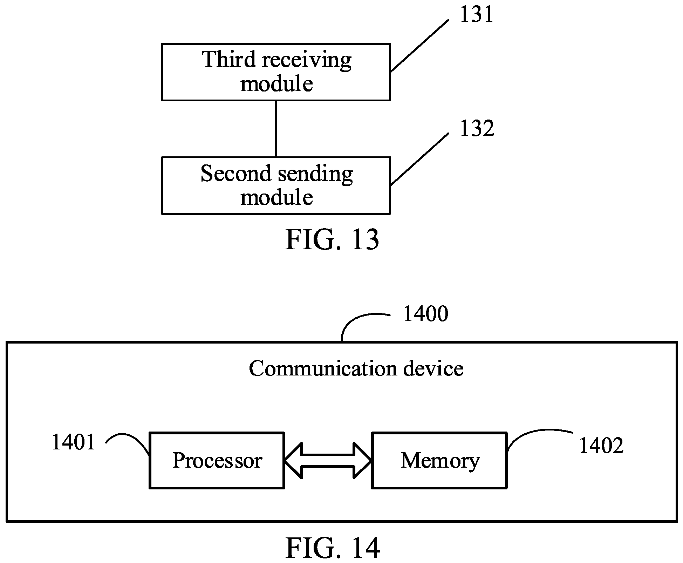

As shown in FIG. 13, an embodiment of this application further provides an information transmission apparatus, used in a first network element. The information transmission apparatus includes:
a third receiving module 131, configured to receive a user equipment location service request sent by a first core network element, where the user equipment location service request is used to request user equipment location information, and the user equipment location service request includes location accuracy and a QoS class; and
a second sending module 132, configured to send the user equipment location information to the first core network element based on the user equipment location service request.

The first network element is a third core network element, a fourth core network element, or a fifth core network element.

Optionally, the second sending module 132 is configured to:
in a case that it is determined that the user equipment location service request requests location information of a group of user equipments, after location information of each user equipment is obtained, send the location information of each user equipment to the first core network element, or after location information of all user equipments in the group of user equipments is obtained, send the location information of the group of user equipments to the first core network element.

The first network element is the fifth core network element.

Optionally, in a case that the first network element is the third core network element or the fifth core network element, the second sending module 132 includes:
a second determining unit, configured to determine whether the location accuracy in the user equipment location service request can be provided; and
a second sending unit, configured to: in a case that it is determined that location information of the location accuracy can be provided, send the user equipment location information to the first core network element.

Optionally, after the second determining unit determines whether the location accuracy in the user equipment location service request can be provided, the information transmission apparatus further includes:
a third sending unit, configured to: if it is determined that the location information of the location accuracy cannot be provided, send the user equipment location service request to a third network element;
a receiving unit, configured to receive user equipment location information sent by the third network element; and
a fourth sending unit, configured to send the user equipment location information to the first core network element.

In a case that the first network element is the third core network element, the third network element is the fourth core network element; and in a case that the first network element is the fifth core network element, the third network element is the third core network element.

Optionally, the location information includes:
geographic location information of a user equipment;
movement information of the user equipment;
location accuracy; and
location timestamp information.

Optionally, the movement information of the user equipment includes:
a movement speed of the user equipment and a movement direction of the user equipment.

Optionally, the location information includes:
location environment indication information.

Optionally, the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

It should be noted that the apparatus embodiment is an apparatus corresponding to the foregoing method applied to the first network element side, and all implementations in the foregoing method embodiment are applicable to the apparatus embodiment with the same technical effects achieved.

An embodiment of this application further provides a network element. The network element is a first network element, and includes a processor and a communication interface. The communication interface is configured to: receive a user equipment location service request sent by a first core network element, where the user equipment location service request is used to request user equipment location information, and the user equipment location service request includes location accuracy and a QoS class; and send the user equipment location information to the first core network element based on the user equipment location service request. The first network element is a third core network element, a fourth core network element, or a fifth core network element. This network element embodiment corresponds to the foregoing first network element-side method embodiment. The implementation processes and implementations of the foregoing method embodiment can be applied to this core network element embodiment with the same technical effects achieved.

Specifically, an embodiment of this application further provides a network element. The network element shown is a first network element. A specific structure of the first network element is shown in FIG. 12, and details are not described herein again.

An embodiment of this application further provides a readable storage medium. The readable storage medium stores a program or an instruction. When the program or the instruction is executed by a processor, the processes of the foregoing information transmission method embodiment are implemented with the same technical effects achieved. To avoid repetition, details are not described herein again.

The processor is the processor in the user equipment described in the foregoing embodiment. The readable storage medium includes a computer-readable storage medium, for example, a computer read-only memory ROM, a random access memory RAM, a magnetic disk, or an optical disc.

Optionally, as shown in FIG. 14, an embodiment of this application further provides a communication device 1400, including a processor 1401 and a memory 1402. The memory 1402 stores a program or an instruction that can be run on the processor 1401. For example, when the communication device 1400 is a first core network element, when the program or the instruction is executed by the processor 1401, the steps of the foregoing information transmission method embodiment shown in FIG. 2 are implemented with the same technical effects achieved. When the communication device 1400 is a first network element, when the program or the instruction is executed by the processor 1401, the steps of the foregoing information transmission method embodiment shown in FIG. 10 are implemented with the same technical effects achieved. To avoid repetition, details are not described herein again.

An embodiment of this application further provides a chip. The chip includes a processor and a communication interface. The communication interface is coupled to the processor, and the processor is configured to run a program or an instruction to implement the processes of the foregoing information transmission method embodiment with the same technical effect achieved. To avoid repetition, details are not described herein again.

It should be understood that the chip in this embodiment of this application may also be referred to as a system-level chip, a system chip, a chip system, a system-on-chip, or the like.

An embodiment of this application further provides a computer program/program product. The computer program/program product is stored in a storage medium, and the computer program/program product is executed by at least one processor to implement the processes of the foregoing information transmission method embodiment with the same technical effects achieved. To avoid repetition, details are not described herein again.

An embodiment of this application further provides an information transmission system, including: a first core network element and a first network element. The first core network element can be configured to execute the steps of the foregoing information transmission method, and the first network element can be configured to execute the steps of the foregoing information transmission method.

It should be noted that, in this specification, the term "include", "contain", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. Without more limitations, elements defined by the sentence "including one" do not exclude that there are still other identical elements in the process, method, object, or apparatus. Furthermore, it should be noted that the scope of the methods and apparatuses in embodiments of this application is not limited to performing the functions in the order shown or discussed, but may also include performing the functions in a substantially simultaneous manner or in a reverse order depending on the functions involved. For example, the described methods may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a user equipment (which may be a mobile phone, a computer, a server, an air-conditioner, a network device, or the like) to perform the method described in embodiments of this application.

Embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An information transmission method, comprising:
receiving, by a first core network element, a location service request from a second core network element, wherein the location service request is used to request location information of at least one user equipment, the location service request comprises location granularity indication information, and the location granularity indication information is used to indicate at least one of location granularities of multiple gradients;
determining, by the first core network element, location accuracy and a quality of service QoS class based on the location service request;
sending, by the first core network element, a user equipment location service requests to a first network element, wherein the user equipment location service request is used to request user equipment location information, the user equipment location service request comprises the location accuracy and the QoS class, and the first network element is a third core network element, a fourth core network element, or a fifth core network element; and
receiving, by the first core network element, the user equipment location information sent by the first network element.

2. The method according to claim 1, wherein a manner of determining, by the first core network element, location accuracy based on the location service request comprises:
mapping, by the first core network element, a location granularity indicated by the location granularity indication information, to obtain the location accuracy.

3. The method according to claim 1, wherein a manner of determining, by the first core network element, a QoS class based on the location service request comprises:
obtaining, by the first core network element, the QoS class carried in the location service request; or
mapping, by the first core network element, analysis accuracy information of interest carried in the location service request, to obtain the QoS class.

4. The method according to any one of claims 1 to 3, wherein the QoS class comprises at least one of the following:
high-level QoS;
medium-level QoS; and
low-level QoS.

5. The method according to claim 1, wherein after the receiving, by the first core network element, the user equipment location information sent by the first network element, the method further comprises:
if determining that the location accuracy of the obtained location information of the at least one user equipment is less than or equal to location accuracy requested by the second core network element, obtaining, by the first core network element, an implemented granularity and result credibility of the location information of the at least one user equipment; and
sending, by the first core network element, the location information and the implemented granularity of the at least one user equipment and the result credibility of the location information to the second core network element.

6. The method according to claim 5, wherein a manner of obtaining, by the first core network element, an implemented granularity of the location information comprises:
mapping the location accuracy of the location information as the implemented granularity.

7. The method according to claim 5, wherein a manner of obtaining, by the first core network element, result credibility of the location information comprises:
determining the result credibility of the location information based on a QoS class implemented by the location information.

8. The method according to claim 1, wherein the user equipment location service request comprises a user equipment identifier or a user equipment group identifier; and
a manner of obtaining the user equipment group identifier comprises:
obtaining, by the first core network element, the user equipment group identifier carried in the location service request; or
mapping, by the first core network element, a location indication carried in the location service request, to obtain the user equipment group identifier.

9. The method according to claim 1, wherein in a case that the first network element is the fourth core network element, a manner of obtaining the fourth core network element comprises:
obtaining, by the first core network element, an address of a second network element of the user equipment; and
in a case that the first core network element determines that the second network element can provide a service for the user equipment, determining the second network element as the fourth core network element, and in a case that the first core network element determines that the second network element cannot provide a service for the user equipment, obtaining an address of the fourth core network element provided by the second network element.

10. The method according to claim 1, wherein in a case that the first network element is the third core network element, a manner of obtaining the third core network element comprises:
in a case that the first core network element determines that information of the at least one user equipment can be collected and used by the first core network element, obtaining an address of at least one third core network element from a sixth core network element, wherein
the at least one third core network element provides a service for the at least one user equipment.

11. The method according to claim 1, wherein the sending, by the first core network element, a user equipment location service request to a first network element comprises:
determining, by the first core network element, a type of the location accuracy; and
in a case that the type of the location accuracy is a first accuracy type, sending, by the first core network element, the user equipment location service request to the first network element, wherein
the first network element is the fourth core network element or the fifth core network element.

12. The method according to claim 1, wherein the location information comprises:
geographic location information of the user equipment;
movement information of the user equipment;
location accuracy; and
location timestamp information.

13. The method according to claim 12, wherein the movement information of the user equipment comprises:
a movement speed of the user equipment and a movement direction of the user equipment.

14. The method according to any one of claims 1 to 14, wherein the location information comprises:
location environment indication information.

15. The method according to claim 14, wherein the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

16. An information transmission method, comprising:
receiving, by a first network element, a user equipment location service request sent by a first core network element, wherein the user equipment location service request is used to request user equipment location information, and the user equipment location service request comprises location accuracy and a QoS class; and
sending, by the first network element, the user equipment location information to the first core network element based on the user equipment location service request, wherein
the first network element is a third core network element, a fourth core network element, or a fifth core network element.

17. The method according to claim 16, wherein the sending, by the first network element, the user equipment location information to the first core network element comprises:
in a case that the first network element determines that the user equipment location service request requests location information of a group of user equipments, after location information of each user equipment is obtained, sending the location information of each user equipment to the first core network element, or after location information of all user equipments in the group of user equipments is obtained, sending the location information of the group of user equipments to the first core network element, wherein
the first network element is the fifth core network element.

18. The method according to claim 16, wherein in a case that the first network element is the third core network element or the fifth core network element, the sending, by the first network element, the user equipment location information to the first core network element based on the user equipment location service request comprises:
determining, by the first network element, whether the location accuracy in the user equipment location service request can be provided; and
in a case that the first network element determines that location information of the location accuracy can be provided, sending the user equipment location information to the first core network element.

19. The method according to claim 18, wherein after the determining, by the first network element, whether the location accuracy in the user equipment location service request can be provided, the method further comprises:
if the first network element determines that the location information of the location accuracy cannot be provided, sending the user equipment location service request to a third network element;
receiving, by the first network element, user equipment location information sent by the third network element; and
sending, by the first network element, the user equipment location information to the first core network element, wherein
in a case that the first network element is the third core network element, the third network element is the fourth core network element; and in a case that the first network element is the fifth core network element, the third network element is the third core network element.

20. The method according to claim 16, wherein the location information comprises:
geographic location information of a user equipment;
movement information of the user equipment;
location accuracy; and
location timestamp information.

21. The method according to claim 20, wherein the movement information of the user equipment comprises:
a movement speed of the user equipment and a movement direction of the user equipment.

22. The method according to any one of claims 16 to 21, wherein the location information comprises:
location environment indication information.

23. The method according to claim 22, wherein the location environment indication information is used to indicate at least one of the following:
the user equipment is located on the ground;
the user equipment is located underground;
the user equipment is located indoors;
the user equipment is located outdoors;
the user equipment is located inside a vehicle; and
the user equipment is located outside the vehicle.

24. An information transmission apparatus, used in a first core network element and comprising:
a first receiving module, configured to receive a location service request from a second core network element, wherein the location service request is used to request location information of at least one user equipment, the location service request comprises location granularity indication information, and the location granularity indication information is used to indicate at least one of location granularities of multiple gradients;
a first determining module, configured to determine location accuracy and a quality of service QoS class based on the location service request;
a first sending module, configured to send a user equipment location service request to a first network element, wherein the user equipment location service request is used to request user equipment location information, the user equipment location service request comprises the location accuracy and the QoS class, and the first network element is a third core network element, a fourth core network element, or a fifth core network element; and
a second receiving module, configured to receive the user equipment location information sent by the first network element.

25. An information transmission apparatus, used in a first network element and comprising:
a third receiving module, configured to receive a user equipment location service request sent by a first core network element, wherein the user equipment location service request is used to request user equipment location information, and the user equipment location service request comprises location accuracy and a QoS class; and
a second sending module, configured to send the user equipment location information to the first core network element based on the user equipment location service request, wherein
the first network element is a third core network element, a fourth core network element, or a fifth core network element.

26. A core network element, wherein the core network element is a first core network element and comprises a processor and a memory; the memory may store a program or an instruction that can be run on the processor; and when the program or the instruction is executed by the processor, the steps of the information transmission method according to any one of claims 1 to 15 are implemented.

27. A network element, wherein the network element is a first network element and comprises a processor and a memory; the memory may store a program or an instruction that can be run on the processor; and when the program or the instruction is executed by the processor, the steps of the information transmission method according to any one of claims 16 to 23 are implemented.

28. A readable storage medium, wherein the readable storage medium stores a program or an instruction, and when the program or the instruction is executed by a processor, the steps of the information transmission method according to any one of claims 1 to 23 are implemented.
